# EUROPÄISCHE PATENTANMELDUNG

(11) **EP 2 036 433 A1**
(43) Veröffentlichungstag der Anmeldung: **18.03.2009**
(21) Anmeldenummer: 08015794.4
(22) Anmeldetag: 08.09.2008
(51) Int. Cl.: A01M 1/20, A01M 19/00, A24C 5/18

(54) **Entwesung in einer Maschine der Tabak verarbeitenden Industrie**

(30) Priorität: 11.09.2007 DE 102007043200
(71) Anmelder: HAUNI Maschinenbau AG, 21033 Hamburg (DE)
(72) Erfinder: Müller, Hans-Heinrich, 22113 Oststeinbek (DE); Ducci, Andreas, 21039 Escheburg (DE); Möller, Henning, 22605 Hamburg (DE)
(74) Vertreter: Seemann, Ralph

(57) **Zusammenfassung**

Die Erfindung betrifft die Verwendung eines heißen Fluidstroms, ein Verfahren zur Entwesung einer Maschine (37,40) und eine entsprechende Maschine (37,40).

Erfindungsgemäß wird ein heißer Fluidstrom (50), der in einer Maschine (37,40), insbesondere einer Maschine der Tabak verarbeitenden Industrie und/oder einer Verpackungsmaschine, strömt, zur Wärmeentwesung der Maschine (37,40) verwendet.
Dabei wird der Fluidstrom (50) auf eine vorgebbare Temperatur oder einen vorgebbaren Temperaturbereich eingestellt, so dass lebende Organismen durch Wärmeeinwirkung abgetötet werden.

Eine erfindungsgemäße Maschine der Tabak verarbeitenden Industrie sieht zur Entwesung der Räume, die für lebende Organismen zugänglich sind, vor, dass diese Räume miteinander verbunden sind, so dass ein Fluidstrom durch die Räume strömen kann.

## Beschreibung

Die Erfindung betrifft die Verwendung eines heißen Fluidstroms, ein Verfahren zur Entwesung einer Maschine und eine entsprechende Maschine.

Die Bekämpfung beispielsweise des Tabakkäfers bei Maschinen zur Zigarettenherstellung oder zur Weiterverarbeitung und Verpackung von Zigaretten ist ein dauerhaftes Problem, das heutzutage in der Regel durch immer wiederkehrende Besprühung der Maschinen mit chemisch oder biologisch wirksamen Substanzen, also Giften, unter Kontrolle gehalten wird. Um keine giftigen Rückstände in Maschinen zu behalten, ist es gewünscht, die entsprechenden Lebewesen ohne Gifte effektiv zu bekämpfen. Hierzu ist vorgeschlagen worden, vgl. beispielsweise die DE 296 18 646 U1, Gebäude oder Gebäudeteile und die in dem Gebäude befindlichen Maschinen durch Erwärmung derselben zu entwesen, wobei unter Entwesung verstanden wird, dass Lebewesen wie Motten, Käfer oder deren Eier oder Larven, abgetötet werden. Hierzu werden die Räume, die entwest werden sollen, über einen relativ langen Zeitraum auf einer entsprechenden Temperatur von beispielsweise 50°C bis 70°C gehalten. In der DE 296 18 646 U1 wird ein Aufheizen von 24 bis 36 Stunden des Gebäudes, in dem eine entsprechende Maschine vorhanden ist, vorgeschlagen. Hierzu ist es somit notwendig, wenigstens drei Tage für die Entwesung zu gebrauchen, da zunächst das Gebäude entsprechend aufgeheizt, dann das Gebäude auf der gewünschten Temperatur gehalten und anschließend wieder abgekühlt werden muss.

Es ist demgemäß Aufgabe der vorliegenden Erfindung, die Entwesung von Maschinen schneller und mit weniger Energieaufwand zu realisieren.

Gelöst wird diese Aufgabe erfindungsgemäß durch die Verwendung eines heißen Fluidstroms zur Wärmeentwesung der Maschine, der in einer Maschine, insbesondere einer Maschine der Tabak verarbeitenden Industrie und/oder einer Verpackungsmaschine, strömt. Durch Verwendung eines heißen Fluidstroms zur Wärmeentwesung der in einer Maschine strömt, können effizient die Räume in der Maschine aufgeheizt werden, die zu entwesen sind. Damit wird eine Erwärmung des gesamten Gebäudes auf die entsprechend hohe Temperatur gespart, wodurch zum einen eine schnellere und effiziente Wärmeentwesung möglich ist und zum anderen weniger Energie verbraucht wird. Ein heißer Fluidstrom ist im Rahmen der Erfindung insbesondere ein auf eine vorgebbare Temperatur erhitzter Fluidstrom.

Vorzugsweise wird ein kontinuierlicher Fluidstrom verwendet, so dass gewährleistet ist, dass kontinuierlich und permanent eine entsprechend hohe Temperatur in der Maschine realisiert ist. Alternativ kann ein intermittierender Fluidstrom verwendet werden. Diese Variante ermöglicht eine vereinfachte Steuerung oder Regelung der Temperatur in der Maschine.

Vorzugsweise strömt der Fluidstrom durch sämtliche Räume der Maschine bis auf luftdichte Räume, so dass sämtliche Räume, insbesondere die, die für Lebewesen zugänglich sind, entwest werden. Um getötete Lebewesen abzutransportieren, kann es vorgesehen sein, den Fluidstrom mit Druckluft wenigstens kurzzeitig durch die Räume hindurchzuführen, so dass die abgetöteten Lebewesen abtransportiert werden können. Unter einem Raum wird insbesondere ein Gebiet in einer Maschine verstanden, das wenigstens teilweise von Wänden umgeben ist. Ein luftdichter Raum ist ein Gebiet, das so von luftdichten Wänden umgeben ist, dass zur Umgebung keinerlei Luftaustausch möglich ist.

Vorzugsweise hat der Fluidstrom eine Temperatur im Bereich von 48°C bis 70°C, insbesondere 50°C bis 62°C, insbesondere 55°C bis 60°C.

Wenn vorzugsweise eine weitere für den üblichen Produktionsbetrieb der Maschine verwendete Heizvorrichtung Verwendung findet, wobei insbesondere ein Luftstrom durch die Heizvorrichtung in der Maschine erwärmt wird, kann die Entwesung noch schneller durchgeführt werden. Eine entsprechende Heizvorrichtung kann zum Beispiel eine Nahtplätte zum Verbinden eines Umhüllungsmaterials um einen Tabakstrang oder einen Filterstrang sein. Es kann ferner die Heizvorrichtung einer Folienverschweißvorrichtung in einer Verpackungsmaschine Verwendung finden oder eine Heizeinrichtung, mittels der Fasern eines Filterstrangs erwärmt werden, damit diese miteinander verbunden werden und ähnliches.

Vorzugsweise ist im Bereich eines temperaturempfindlichen Maschinenteils ein Temperatursensor vorgesehen, mittels dessen ein Steuersignal für den Fluidstrom erzeugt wird. Der Temperatursensor kann beispielsweise bei einer zu hohen Temperatur dafür sorgen, dass die Fluidstromtemperatur erniedrigt wird, beispielsweise durch Abgabe eines Steuerungssignals, das die Temperatur bei einem Heizlüfter verringert, der den Fluidstrom erzeugt. Hierdurch wird verhindert, dass temperaturempfindliche Maschinenteile, wie beispielsweise eine Steuervorrichtung mit Prozessoren, zu hoch erhitzt wird, so dass eine Schädigung vermieden werden kann.

Es ist ferner vorzugsweise ein Sensor aus wärmeempfindlichem Indikatormaterial vorgesehen, der bei Übersteigen einer vorgebbaren oder von dem Indikatormaterial abhängigen Temperatur, irreversibel eine Eigenschaft ändert. Hierbei ist beispielsweise an ein Material zu denken, dass bei beispielsweise ca. 80°C schmilzt und damit irreversibel die Form ändert. Es kann auch ein Material vorgesehen sein, dass ab einer bestimmten Temperatur irreversibel die Farbe oder die Leitfähigkeit ändert. Hierdurch können Fehlbedienungen bei der Entwesung aufgespürt werden.

Es ist besonders bevorzugt, wenn keine chemisch oder biologisch wirksame Substanz zur nicht auf Hitze basierenden Abtötung von Lebewesen verwendet wird. Eine derartige Substanz ist beispielsweise eine für diese Lebewesen wie den Tabakkäfer giftige Substanz, für die es zu vermeiden ist, dass diese in das in der Maschine zu fertigende Produkt gelangt.

Die Aufgabe wird ferner durch ein Verfahren zur Entwesung einer Maschine, insbesondere einer Maschine der Tabak verarbeitenden Industrie und/oder einer Verpackungsmaschine, mit den folgenden Verfahrensschritten gelöst:
- Bereitstellen eines Fluidstroms,
- Durchströmen des Fluidstroms durch die Maschine, wobei der Fluidstrom auf eine vorgebbare Temperatur oder einen vorgebbaren Temperaturbereich eingestellt wird, so dass lebende Organismen durch Wärmeeinwirkung abgetötet werden.

Durch Vorsehen eines Fluidstroms, der durch die Maschine strömt und nicht wie im Stand der Technik außerhalb der Maschine durch das gesamte Gebäude, in dem die Maschine aufgebaut ist, strömt und damit das Gebäude erwärmt, ist es effizient möglich, dass die lebenden Organismen in der Maschine abgetötet werden können.

Hierzu wird vorzugsweise vor Anwendung des erfindungsgemäßen Verfahrens die Maschine leergefahren, d.h. zur Produktion verwendete Materialien wie Tabak aus der Maschine entfernt.

Vorzugsweise werden sämtliche für die lebenden Organismen zugänglichen Räume in der Maschine auf eine Temperatur, die größer oder gleich einer vorgebbaren Minimaltemperatur ist, erhitzt. Unter lebenden Organismen sind im Rahmen der Erfindung Käfer, Larven, Eier, Maden usw. zu verstehen und insbesondere die von dem Tabakkäfer herrührenden Organismen. Vorzugsweise werden die Räume über eine vorgebbare Zeitdauer auf eine vorgebbare Minimaltemperatur oder eine höhere Temperatur als die Minimaltemperatur erhitzt.

Vorzugsweise werden sämtliche Räume, die für die lebenden Organismen zugänglich sind, von dem Luftstrom durchströmt. Alternativ können auch einige Räume nicht vom Luftstrom durchströmt werden, wobei dann die weiteren Räume durch andere Heizvorrichtungen, beispielsweise auf Konvektion beruhende Heizvorrichtungen, aufgeheizt werden. Es kann vorgesehen sein, sämtliche Räume, in denen temperaturempfindliche Geräte vorhanden sind, von der Temperatur her zu überwachen und entsprechend Steuersignale zu erzeugen, die die Temperatur des Fluidstroms und/oder die Menge der durch die Räume geführten Luft steuern.

Vorzugsweise liegt die vorgebbare Temperatur oder der vorgebbare Temperaturbereich in einem Bereich von 48°C bis 70°C, insbesondere 50°C bis 62°C, insbesondere 55°C bis 60°C.

Wenn vorzugsweise vor dem Durchströmen des Fluidstroms durch die Maschine eine Dichtung, die die Maschine zum Außenbereich abgrenzt, gereinigt wird, ist das Verfahren besonders effizient durchzuführen, da so wenig Energie in die Umgebung abgegeben wird und Tabak sowie mögliche Tabakkäfernester im Grenzbereich zwischen dem warmen Innen- und dem kälteren Außenbereich präventiv entfernt werden können. Ferner kann auch an gewollten Austritten bzw. Austrittsöffnungen zum Abgeben des Fluidstroms aus der Maschine ein Rohrsystem bzw. ein Leitungssystem vorgesehen sein, um die im Fluidstrom vorhandene Wärme zurückzugewinnen. Herzu kann dann auch ein Wärmetauscher vorgesehen sein, um möglichst energieeffizient zu verfahren. Dies ist insbesondere eine bevorzugte Verbesserung der erfindungsgemäßen Maschine, die nachfolgend noch beschrieben wird. Mit dem Außenbereich ist hierbei insbesondere die Umgebung der Maschine gemeint. Vorzugsweise werden mehrere Dichtungen und insbesondere vorzugsweise alle entsprechenden Dichtungen, die die Maschine zum Außenbereich abgrenzen, gereinigt.

Es ist besonders bevorzugt, wenn vor dem Durchströmen des Fluid-stroms durch die Maschine von der Maschine ein Druckluftanschluss abgenommen wird, ein Druckmodul abgenommen wird, die Druckluftzufuhr und/oder Saugluftabfuhr beendet wird und/oder ein Bandförderer entspannt wird. Hierdurch werden Schädigungen an der Maschine bzw. den Maschinenteilen vermieden. Es ist ferner sehr bevorzugt, wenn vor dem Durchströmen des Fluidstroms Klebstoff oder Leim aus der Maschine entfernt wird und/oder wenigstens eine Elektronikvorrichtung ausgeschaltet wird. Hierdurch wird vermieden, dass Klebstoff, beispielsweise Heißkleber, schon im Behälter oder in einer Leitung, die zu einem Aufbringorgan führt, abbindet und ferner Elektronikvorrichtungen, wie beispielsweise Computer oder Steuervorrichtungen, die in den zu erwärmenden Räumen angeordnet sind, zu heiß werden, so dass diese beschädigt werden können. Es können vorzugsweise auch Teile der Steuervorrichtung oder weitere Steuervorrichtungen und Computer durch eine Bypass-Versorgung oder eine andere als die Hauptversorgung mit Strom versehen sein, um beispielsweise Temperaturen in den Räumen zu steuern oder die durch Räume strömende Luft von der Menge her zu steuern oder andere Heizvorrichtungen anzusteuern bzw. Strom zur Verfügung zu stellen, der zum Heizen dient.

Die Aufgabe wird ferner durch eine Maschine der Tabak verarbeitenden Industrie oder Verpackungsmaschine, insbesondere der Tabak verarbeitenden Industrie, mit Räumen, die für lebende Organismen, die über ein in der Maschine zu verarbeitendes Produkt in die Maschine gelangen, zugänglich sind, gelöst, wobei die Räume so miteinander verbunden sind, dass ein Fluidstrom durch die Räume strömen kann. Hierdurch ist eine Entwesung der Maschine effizient möglich.

Vorzugsweise sind sämtliche für lebende Organismen zugänglichen Räume mit einem Fluidstrom durchströmbar. Der Fluidstrom kann über einen Weg, zwei Wege oder mehrere Wege durch die Maschine geleitet werden. Vorzugsweise ist eine Steuervorrichtung vorgesehen, mittels der die Temperatur im zugeführten Fluidstrom einstellbar ist. Ferner vorzugsweise dient die Steuervorrichtung dazu, Signale von wenigstens einem Temperatursensor aufzunehmen, um die Temperatur im zugeführten Fluidstrom zu steuern oder zu regeln.

Alternativ oder ergänzend hierzu kann vorgesehen sein, den Fluidstrom durch die Räume auf unterschiedlichen Wegen unterschiedlich stark auszugestalten, d.h. dass die Menge des Fluidstroms von der Gesamtmenge her aber auch von den einzelnen Teilmengen verschiedener Fluidströme, die auf verschiedenen Wegen durch die Maschine geleitet werden, gesteuert wird, Hierfür sind entsprechende Steuermittel vorgesehen, wie beispielsweise Schieber, Klappen, jalousieartige Vorrichtungen usw., die dazu dienen, den Querschnitt von Öffnungen, durch die der Fluidstrom in die jeweiligen Räume strömt, zu verändern. Hierdurch kann die Wärmeaufnahme in den jeweiligen Räumen entsprechend gut gesteuert werden. Hierzu ist es bevorzugt, wenn pro Raum oder pro Bereich der Maschine mit mehreren Räumen ein Temperatursensor vorgesehen ist, der der Steuervorrichtung die entsprechenden Signale zuführt, die die Temperatur in dem jeweiligen Raum bzw. Bereich wiedergeben.

Vorzugsweise ist in einer zwischen zwei Räumen angeordneten Wand ein Durchbruch vorgesehen. Ferner wird vorzugsweise zur Leitung des Fluidstroms von einem Raum zum nächsten Raum ein Rohr oder eine Leitung zwischen den Räumen vorgesehen.

Besonders bevorzugt ist es, wenn die Maschine nach außen im Wesentlichen luftdicht gekapselt ist. Hierdurch kann der Energieverbrauch deutlich reduziert werden. Vorzugsweise ist zur Kapselung wenigstens eine Dichtung vorgesehen. Die Dichtung ist dann beispielsweise an entsprechenden Klappen nach außen hin angeordnet und schließt mit entsprechenden weiteren Teilen der Außenhülle der entsprechenden Maschine ab.

Die Wärme- bzw. Energieeffizienz wird noch dadurch deutlich erhöht, dass in der Außenhülle der Maschine wärmedämmende Materialien Verwendung finden, beispielsweise Wärmedämmmatten. Diese sind vorzugsweise in luftdichten Räumen angeordnet, damit sich im Wärmedämmmaterial keine lebenden Organismen ansammeln können. Vorzugsweise ist die Maschine vollständig wärmegedämmt.

Ferner vorzugsweise ist zur Erzeugung eines Fluidstroms in oder an der Maschine eine Pumpe oder ein Ventilator vorgesehen. Der Ventilator oder die Pumpe können außerhalb des Innenraums der Maschine angeordnet sein.

Wenn zur Erhitzung des Fluidstroms oder eines Raums eine in der Maschine für den normalen Produktionsbetrieb vorhandene Heizvorrichtung Verwendung findet und/oder der Fluidstrom außerhalb des Innenraums erhitzt wird, ist eine besonders effiziente Erwärmung der Maschine möglich. Vorzugsweise wird ein Heizlüfter verwendet.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische dreidimensionale Darstellung einer erfindungsgemäßen Strangmaschine, wie beispielswei- se eine Tabakstrangmaschine, und
- Fig. 2: eine schematische Schnittdarstellung einer Filteran- setzmaschine.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

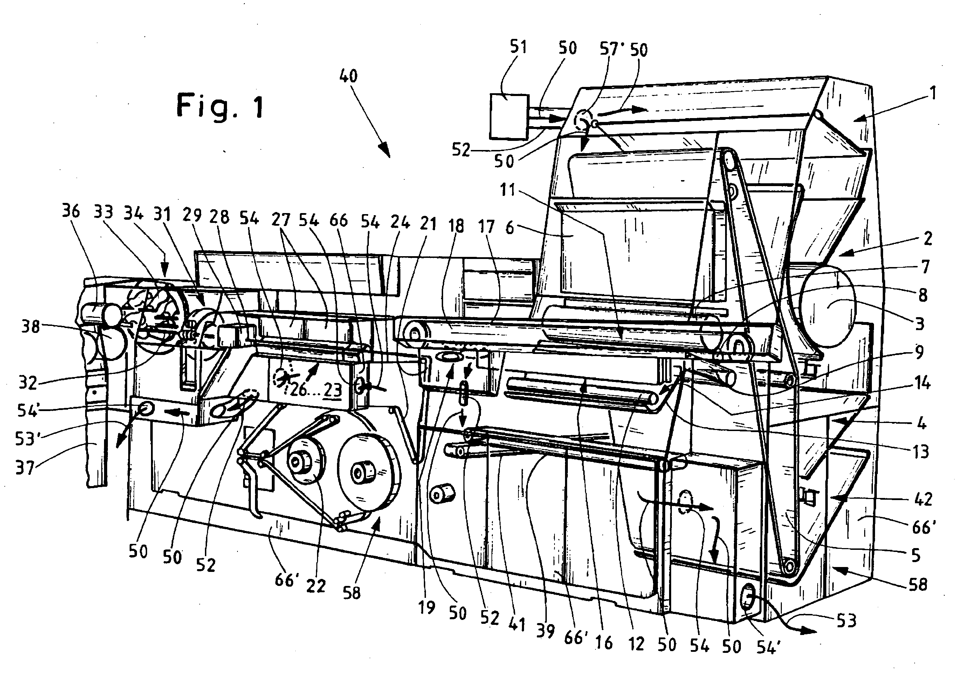

Fig. 1 zeigt schematisch eine Zigarettenstrangmaschine 40 in dreidimensionaler Darstellung, wobei die äußere Wand bzw. die Außenhülle der Maschine 40 transparent dargestellt ist, so dass innenliegende Teile der Maschine erkennbar sind. Die Maschine funktioniert im Wesentlichen wie nachfolgend beschrieben und ist beispielsweise aus der DE 36 24 098 C2 von der Grundfunktionalität her bekannt.

Von einer Schleuse 1 wird ein Vorverteiler 2 portionsweise mit Tabak beschickt. Eine Entnahmewalze 3 des Vorverteilers 2 beschickt gesteuert einen Vorratsbehälter 4 mit Tabak, aus dem ein Steilförderer 5 Tabak entnimmt, der einen Stauschacht 6 gesteuert beschickt. Aus dem Stauschacht 6 entnimmt eine Stiftwalze 7 einen gleichförmigen Tabakstrom, der von einer Ausschlagwalze 9 aus den Stiften der Stiftwalze 7 herausgeschlagen und auf ein umlaufendes Streutuch 9 geschleudert wird. Ein auf dem Streutuch 9 gebildetes Tabakvlies wird in eine Sichteinrichtung 11 geschleudert. Die zur Weiterverarbeitung benutzten Tabakteilchen werden von der Luft in einen von einer Stiftwalze 12 in einer Wand 13 gebildeten Trichter 14 gelenkt. Von der Stiftwalze 12 wird der Tabak in einen Tabakkanal 16 gegen einen Strangförderer 17 geschleudert, an dem der Tabak mittels in einer Unterdruckkammer 18 gesaugter Luft gehalten und ein Tabakstrang aufgeschauert wird. Es handelt sich beim Strangförderer somit um einen Saugbandförderer.

Ein Egalisator 19 entfernt überschüssigen Tabak von dem Tabakstrang, der dann auf einen im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandemnahtplätte 27 getrocknet. Ein so gebildeter Zigarettenstrang 28 durchläuft ein Strangdichtemessgerät 29, das den Egalisator 19 steuert und wird von einem Messerapparat 31 in doppeltlange Zigaretten 32 geschnitten.

Die doppeltlangen Zigaretten 32 werden von einer gesteuerte Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten geteilt werden. Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

Zur Entwesung der Maschine 40 von beispielsweise Tabakkäfern sowie deren Eier und Larven, wird zunächst die Maschine im üblichen Betrieb leergefahren. Es können dann an zugänglichen Bereichen Materialien wie Tabakstaub, Tabakkrümel usw. entnommen werden. Es werden dann alle vorhandenen Dichtungen 64 an den Außentüren bzw. der Außenwand 66' gereinigt, was durch vorgebbare Spaltbreiten und geschlossene Dichtprofile vereinfacht wird.

Diese Teile sollten gereinigt werden, da diese Maschinenteile zum Teil nicht im Innenbereich liegen.

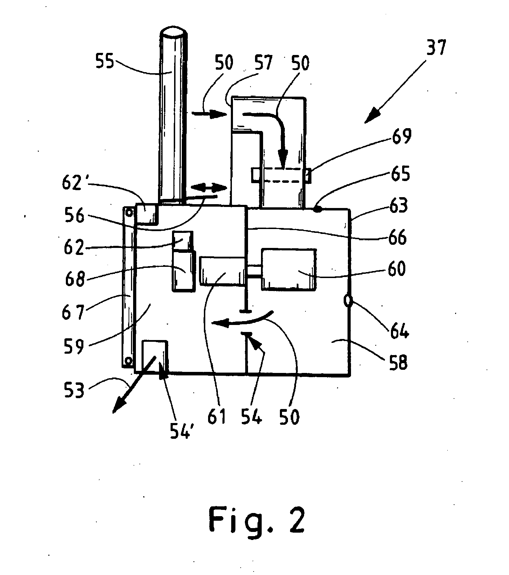

Es werden dann beispielsweise große Rohre zu und von der Maschine, wie beispielsweise Entstaubungsrohre oder Beschickungsrohre, durch installierte Schieber, wie beispielsweise den Schieber 56 aus Fig. 2, verschlossen. Die Strangmaschine 40 ist ansonsten so ausgeführt, dass sie nur in wenigen Öffnungen eine Verbindung nach außen hat, beispielsweise an den Öffnungen 54'. Zum Einbringen eines erwärmten Luftstromes kann beispielsweise die Luftansaugöffnung 57 aus der Fig. 2 bzw. die Lufteinlassöffnung 57' in Fig. 1 dienen. An diesen Stellen kann beispielsweise über zur Maschine 40 oder 37 gehörende Adapter oder auch direkt ein externes Heizgebläse wie ein Heizlüfter 51 angeschlossen werden.

In Fig. 2, in der in schematischer Darstellung eine Filteransetzmaschine 37 in Schnittdarstellung dargestellt ist, wird ein Heizsauggebläse 69, das im oberen Bereich der Maschine angeordnet ist, verwendet.

An definierten und vorgebbaren Positionen der Maschine 40 oder 37 können mit beispielsweise Schiebern Öffnungen 54' geöffnet werden, aus denen die eingebrachte warme Luft bzw. Heizluft wieder austreten kann. Entsprechend können auch Schieber in der Maschine vorgesehen sein, um dort vorgesehene Öffnungen 54 oder Rohre 52 zu verschließen. Demgemäß können entsprechende Verschlussvorrichtungen vorgesehen sein, die ein vollständiges Verschließen der Öffnungen oder ein teilweises Verschließen der Öffnungen bzw. ein vollständiges Öffnen der Öffnungen 54 und Rohre 52 ermöglicht. In Fig. 1 sind diese Öffnungen mit 54 schematisch angedeutet und entsprechende Rohre mit 52. Die Öffnungen und Rohre verbinden entsprechende Räume in der Maschine 40, und zwar Räume im Verfahrensraum 58. In Fig. 2 ist eine Öffnung 54 vorgesehen, die den Verfahrensraum 58, in der beispielsweise eine Trommel 60 angeordnet ist, mit einem Maschinenraum 59 verbindet. Die Öffnung 54 ist in einer Wand 66 zwischen Verfahrensraum 58 und Maschinenraum 59 vorgesehen. Es werden entsprechend Öffnungen und Rohre vorgesehen, um sämtliche Räume in der Maschine, insbesondere Räume des Verfahrensraums 58 und des Maschineraums 59, die ansonsten verschlossen (allerdings für Organismen noch zugänglich) bzw. teilweise verschlossen wären, effizient mit dem Luftstrom zu versorgen. Hierdurch werden sämtliche Räume durch die heiße Luft bzw. den Warmluftstrom 50 erfasst. Alternativ oder zusätzlich können vorhandene Heizvorrichtungen in der Maschine 37 oder 40 dazu dienen, entsprechend abgeschlossene Räume oder Räume, die auch mit Öffnungen 54 versehen sind, zu erwärmen. Hierbei können schon vorhandene Komponenten in der Maschine Verwendung finden oder zusätzliche Komponenten, wie beispielsweise Heizstrahler, die auf der Erwärmung eines Heizdrahtes oder Heizstabes beruhen, oder Infrarotheizstromstrahler oder Infrarotstrahler.

Es können in der Außenwand 66' bzw. der Außenhülle der Maschine auch Öffnungen vorgesehen sein, um Temperaturmesssensoren einzubringen. Alternativ können Temperaturmesssensoren in der Maschine ohne Öffnungen nach außen vorgesehen sein. Ein Temperatursensor 62 ist beispielsweise in Fig. 2 dargestellt, der in der Nähe einer Steuervorrichtung 68 angeordnet ist, die beispielsweise den Servomotor 61 der Trommel 60 steuert. In Fig. 2 ist auch ein Entstaubungsrohr 55 vorgesehen, dass zur Entwesung der Maschine von der Maschine mit einem Schieber 56 abgekoppelt wird. In den Figuren 1 und 2 ist schematisch auch die Abluft 53 bzw. 53' dargestellt.

An diversen kritischen Punkten in der Maschine z.B. im Schaltschrankbereich, können Indikatoren wie ein Temperatursensor 62' vorgesehen sein, die sich bei Erhitzung über eine festsetzbare Grenztemperatur irreversibel verändern, beispielsweise durch Einschmelzen. So kann beispielsweise geprüft werden, ob eine zulässige Temperatur überschritten wurde.

Im Betrieb der entsprechenden Maschine 37 oder 40 wird nun Heißluft bzw. ein Warmluftstrom 50 durch die Maschine geleitet, so dass sämtliche Räume in der Maschine, die für lebende Organismen zugänglich sind, auf eine vorgebbare Temperatur bzw. in einem vorgebbaren Temperaturbereich aufgeheizt werden können. Alternativ oder zusätzlich können entsprechende abgetrennte Räume bzw. gesonderte Räume auch zusätzlich anders aufgeheizt werden. Durch eine geschickte Stromführung werden sämtliche Räume, die erhitzt werden sollen, möglichst gleichmäßig erhitzt. Eine entsprechende Steuerung der Temperatur kann darüber geschehen, dass in verschiedenen Räumen Temperatursensoren vorgesehen sind, die die jeweilige vorherrschende Temperatur einem Steuergerät zur Verfügung stellen. Das Steuergerät kann dann gesonderte Heizvorrichtungen in den Räumen so ansteuern, dass eine vorgebbare Temperatur erreicht wird bzw. auf eine entsprechend vorgebbare Temperatur geregelt wird. Ferner kann die Steuervorrichtung zusätzlich oder alleine den Luftstrom sowohl von der Temperatur als auch von der Menge her steuern, und zwar sowohl von der Gesamtmenge als auch von der Menge von Teilströmen her. Hierzu können die Teilluftströme 50 durch Verminderung von Querschnitten der Öffnungen 54 eine unterschiedliche Menge bzw. Stärke des Warmluftstroms in den jeweiligen Räumen hervorrufen, so dass hierdurch auch die Temperatur in diesen Räumen gesteuert oder geregelt werden kann.

Zusätzlich kann vorgesehen sein, die Abluftströme 53 und 53' in die Maschine zurückzuführen, beispielsweise durch Rohre oder Leitungen, die von den Öffnungen 54', die von der Maschine nach außen führen, zu dem Heißlüfter 51 oder in die Luftansaugöffnung 57 führen. Es ist ferner auch möglich, die Energie, die in dem austretenden Warmluftstrom vorhanden ist, zurückzugewinnen, indem ein Wärmetauscher vorgesehen ist.

In Fig. 2 ist noch eine Klappe 63 vorgesehen, die an einem Scharnier 65 angelenkt ist, mittels der der vordere Raum bzw. Verfahrensraum 58 der Filteransetzmaschine 37 im Wesentlichen luftdicht durch eine Dichtung 64 mit der Wand 66 abgeschlossen werden kann.

Erfindungsgemäß wurden die entsprechenden Maschinen eingehaust und die Luft im Gehäuse ausreichend hoch erwärmt, so dass der Tabakkäfer und dessen Larven sowie Eier in der Maschine entwest werden konnten. Um eine aufwändige Einhausung zu umgehen, sollten die Maschinen im Wesentlichen luftdicht ausgestaltet sein. Die Maschinenaußenwände stellen dann die Umhausung dar. Zusätzlich wird die Maschine mit einem Rohrsystem bzw. Öffnungen in Zwischenwänden bzw. Wänden 66 für ein Fluid, wie beispielsweise Warmluft, ausgestattet. Über das Rohrsystem bzw. über die Öffnungen wird heißes Fluid in der Maschine verteilt und in der Maschine auf diese Weise schnell und energiesparend aufgeheizt. Die Wärmequelle für das Fluid kann innerhalb der Maschine selbst, z.B. in Form von Heizstäben vorgesehen sein oder aber außerhalb der Maschine, beispielsweise in Form eines Heizlüfters aufgestellt sein. Zu- und Rückfluss des Wärmefluids werden an entsprechend vorgesehene Anschlüsse der Maschine geführt. Für einen Zwangsumlauf des Fluids sorgt vorzugsweise eine Pumpe oder ein Ventilator. Bevorzugterweise werden luftdichte Räume wie der luftdichte Raum 67 aus Fig. 2 nicht von dem Fluid durchströmt. Ansonsten wird vorzugsweise das Fluid durch die jeweiligen weiteren Räume geführt.

### Bezuaszeichenliste

- 1: Schleuse
- 2: Vorverteiler
- 3: Entnahmewalze
- 4: Vorratsbehälter
- 5: Steilförderer
- 6: Stauschacht
- 7: Stiftwalze
- 8: Ausschlagwalze
- 9: Streutuch
- 11: Sichteinrichtung
- 12: Stiftwalze
- 13: Wand
- 14: Trichter
- 16: Tabakkanal
- 17: Strangförderer
- 18: Unterdruckkammer
- 19: Egalisator
- 21: Zigarettenpapierstreifen
- 22: Bobine
- 23: Druckwerk
- 24: Formatband
- 26: Format
- 27: Tandemnahtplätte
- 28: Zigarettenstrang
- 29: Strangdichtemessgerät
- 31: Messerapparat
- 32: doppeltlange Zigarette
- 33: gesteuerte Arme
- 34: Übergabevorrichtung
- 36: Übernahmetrommel
- 37: Filteransetzmaschine
- 38: Schneidtrommel
- 39: Förderband
- 40: Strangmaschine
- 41: Förderband
- 42: Behälter
- 50: Warmluftstrom
- 51: Heißlüfter
- 52: Rohr
- 53, 53': Abluft
- 54: Öffnung
- 54': Öffnung
- 55: Entstaubungsrohr
- 56: Verschlussschieber
- 57: Luftansaugöffnung
- 57': Lufteinlassöffnung
- 58: Verfahrensraum
- 59: Maschinenraum
- 60: Trommel
- 61: Servomotor
- 62: Temperatursensor
- 62': Temperatursensor
- 63: Klappe
- 64: Dichtung
- 65: Scharnier
- 66: Wand
- 66': Außenwand
- 67: luftdichter Raum
- 68: Steuervorrichtung
- 69: Heizsauggebläse

## Patentansprüche

1. Verwendung eines heißen Fluidstroms (50), der in einer Maschine (37, 40), insbesondere einer Maschine der Tabak verarbeitenden Industrie und/oder einer Verpackungsmaschine, strömt, zur Wärmeentwesung der Maschine (37, 40).

2. Verwendung nach Anspruch 1, **dadurch gekennzeichnet, dass** ein kontinuierlicher oder intermittierender Fluidstrom (50) verwendet wird, wobei insbesondere der Fluidstrom (50) durch sämtliche Räume (58, 59) der Maschine (37, 40) bis auf luftdichte Räume (67') strömt.

3. Verwendung nach Anspruch 1 oder 2, **dadurch gekennzeichnet, dass** der Fluidstrom (50) eine Temperatur im Bereich von 48°C bis 70°C, insbesondere 50°C bis 62°C, insbesondere 55°C bis 60°C, hat.

4. Verwendung nach einem der Ansprüche 1 bis 3, **dadurch gekennzeichnet, dass** eine weitere für den üblichen Produktionsbetrieb der Maschine (37, 40) verwendete Heizvorrichtung (27) Verwendung findet, wobei insbesondere ein Fluidstrom, insbesondere Luftstrom, durch die Heizvorrichtung (27) in der Maschine (37, 40) erwärmt wird, wobei insbesondere im Bereich eines temperaturempfindlichen Maschinenteils (68) ein Temperatursensor (62) vorgesehen ist, mittels dessen ein Steuersignal für den Fluidstrom (50) erzeugt wird, wobei insbesondere ein Sensor (62') aus wärmeempfindlichem Indikatormaterial vorgesehen ist, der bei Übersteigen einer vorgebbaren oder von dem Indikatormaterial abhängigen Temperatur, irreversibel eine Eigenschaft ändert.

5. Verwendung nach einem der Ansprüche 1 bis 4, **dadurch gekennzeichnet, dass** keine chemisch oder biologisch wirksame Substanz zur nicht auf Hitze basierenden Abtötung von Lebewesen verwendet wird.

6. Verfahren zur Entwesung einer Maschine (37, 40), insbesondere einer Maschine der Tabak verarbeitenden Industrie und/oder einer Verpackungsmaschine, mit den folgenden Verfahrensschritten:
- Bereitstellen eines Fluidstroms (50),
- Durchströmen des Fluidstroms (50) durch die Maschine (37, 40), wobei der Fluidstrom (50) auf eine vorgebbare Temperatur oder einen vorgebbaren Temperaturbereich eingestellt wird, so dass lebende Organismen durch Wärmeeinwirkung abgetötet werden.

7. Verfahren nach Anspruch 6, **dadurch gekennzeichnet, dass** sämtliche für die lebenden Organismen zugänglichen Räume (58, 59) in der Maschine (37, 40) auf eine Temperatur, die größer oder gleich einer vorgebbaren Minimaltemperatur ist, erhitzt werden, wobei insbesondere sämtliche Räume (58, 59), die für die lebenden Organismen zugänglich sind, von dem Luftstrom (50) durchströmt werden.

8. Verfahren nach Anspruch 6 oder 7, **dadurch gekennzeichnet, dass** die vorgebbare Temperatur oder der vorgebbare Temperaturbereich in einem Bereich von 48°C bis 70°C, insbesondere 50°C bis 62°C, insbesondere 55°C bis 60°C, liegt.

9. Verfahren nach einem der Ansprüche 6 bis 8, **dadurch gekennzeichnet, dass** vor dem Durchströmen des Fluidstroms (50) durch die Maschine (37, 40) eine Dichtung (64), die die Maschine (37, 40) zum Außenbereich abgrenzt, gereinigt wird, wobei insbesondere vor dem Durchströmen des Fluidstroms (50) durch die Maschine (37, 40) von der Maschine (37, 40) ein Druckluftanschluss abgenommen wird, ein Druckmodul abgenommen wird, die Druckluftzufuhr und/oder Saugluftabfuhr beendet wird und/oder ein Bandförderer (17, 24, 39, 41) entspannt wird, wobei insbesondere vor dem Durchströmen des Fluidstroms (50) Klebstoff aus der Maschine entfernt wird und/oder wenigstens eine Elektronikvorrichtung (68) ausgeschaltet wird.

10. Maschine (37, 40) der Tabak verarbeitenden Industrie oder Verpackungsmaschine, insbesondere der Tabak verarbeitenden Industrie, mit Räumen (58, 59), die für lebende Organismen, die über ein in der Maschine (37, 40) zu verarbeitendes Produkt (28, 32) in die Maschine (37, 40) gelangen, zugänglich sind, wobei die Räume (58, 59) so miteinander verbunden sind, dass ein Fluidstrom (50) durch die Räume (58, 59) strömen kann.

11. Maschine (37, 40) nach Anspruch 10, **dadurch gekennzeichnet, dass** sämtliche für lebende Organismen zugängliche Räume (58, 59) mit einem Fluidstrom (50) durchströmbar sind, wobei insbesondere in einer zwischen zwei Räumen (58, 59) angeordneten Wand (66) ein Durchbruch (54, 52) vorgesehen ist, wobei insbesondere zur Leitung des Fluidstroms (50) von einem Raum (58, 59) zum nächsten Raum (58, 59) ein Rohr (52) oder eine Leitung zwischen den Räumen (58, 59) vorgesehen ist.

12. Maschine (37, 40) nach Anspruch 10 oder 11, **dadurch gekennzeichnet, dass** die Maschine (37, 40) nach außen im Wesentlichen luftdicht gekapselt ist, wobei insbesondere zur Kapselung wenigstens eine Dichtung (64) vorgesehen ist.

13. Maschine (37, 40) nach einem der Ansprüche 10 bis 12, **dadurch gekennzeichnet, dass** in der Außenhülle (66') der Maschine (37, 40) wärmedämmende Materialien Verwendung finden.

14. Maschine (37, 40) nach einem der Ansprüche 10 bis 13, **dadurch gekennzeichnet, dass** zur Erzeugung eines Fluidstroms (50) in oder an der Maschine (37, 40) eine Pumpe oder ein Ventilator (51) vorgesehen ist.

15. Maschine (37, 40) nach einem der Ansprüche 10 bis 14, **dadurch gekennzeichnet, dass** zur Erhitzung des Fluidstroms (50) eine in der Maschine (37, 40) für den normalen Produktionsbetrieb vorhandene Heizvorrichtung Verwendung findet und/oder der Fluidstrom (50) außerhalb des Innenraums (58, 59) erhitzt wird.
